# FASCICULE DE BREVET EUROPEEN

(11) **EP 0 694 427 B1**
(45) Date de publication et mention de la délivrance du brevet: **11.04.2001**
(21) Numéro de dépôt: 95401722.4
(22) Date de dépôt: 19.07.1995
(51) Int. Cl.: B60J 5/04, B62D 65/00

(54) **Cassette-vitre pour porte de véhicule et procédé de montage d'une telle cassette**
Fenstermodul für Fahrzeugtür und Montageverfahren eines solchen Modules
Door window module and method mounting such a module

(30) Priorité: 26.07.1994 DE 4426426
(43) Date de publication de la demande: 31.01.1996
(73) Titulaire: MECAPLAST SAM, MC-98000 Monaco (MC)
(72) Inventeur: Morando, Patrick, F-06000 Nice (FR)
(74) Mandataire: Debay, Yves

(56) Documents cités:
- EP-A- 0 286 923
- EP-A- 0 416 208
- EP-A- 0 420 617
- DE-A- 3 836 511
- DE-A- 4 343 254
- US-A- 4 716 682

## Description

La présente invention concerne un procédé de montage d'une cassette-vitre et un système de montage permettant la mise en oeuvre du procédé.

Il est connu dans l'industrie automobile de reporter l'ensemble des fonctions présentes à l'intérieur de la porte du véhicule, sur un ensemble appelé "cassette". Ainsi, le brevet américain 4,882,842 enseigne une telle cassette comportant un ensemble de fonctions de verrouillage, d'ouverture de portes, de lève-vitre, etc...

Le montage de telles cassettes s'effectue en général sur des portes de véhicules dont une paroi du caisson est constituée par la cassette elle-même. En effet, comme cela est connu par le brevet US 5,095,659, si l'on veut installer une cassette pourvue de la vitre associée à la fonction lève-vitre, il est' nécessaire que la porte ait un caisson découpé à l'intérieur pour permettre la mise en place de l'ensemble cassette-vitre. Ceci nécessite la mise en place de renforts au niveau de la cassette. D'autre part le caisson de la porte se trouve affaibli par l'absence du longeron horizontal complétant la constitution du puits de vitre.

Lorsqu'on veut utiliser un caisson porte de véhicule présentant d'une part une ouverture permettant le passage des composants tels que lève-vitre, serrure, montés sur une cassette de façon à former un caisson ouvert mais dont la rigidité est suffisante pour permettre le stockage, et d'autre part un puits de vitre permettant le passage de la vitre, on est obligé, pour la mise en place de l'ensemble de procéder en plusieurs opérations.

Ainsi, une telle porte, comportant un cadre de vitre formant une baie dans laquelle la vitre coulisse pour descendre à travers le puits de vitre est enseignée par la demande de brevet EP dans 0 385 823. lorsque l'on veut monter la platine, on est obligé de désolidariser la platine de la vitre, de monter la platine dans l'ouverture de la porte du caisson et ensuite d'assembler la vitre sur la platine. Pour que l'ensemble fonctionne correctement, il est au préalable nécessaire, comme enseigné par ce brevet EP 0 385 823, d'effectuer une opération de pré-assemblage de la platine et du lève-vitre, de façon à assurer un pré-réglage de la vitre. Ceci constitue donc des opérations préalables au montage et onéreuses.

Un premier but de l'invention est donc de proposer un procédé de montage permettant de pallier les inconvénients de l'art antérieur.

Ce but est atteint par le fait que le procédé de montage d'une cassette de porte et d'une vitre, dans une portière évidée et pourvue d'une puits de vitre, par une ouverture pratiquée dans la cloison intérieure de la portière, est caractérisé en ce que la vitre est montée sur la cassette avec des moyens d'articulation permettant un jeu angulaire par rapport à la cassette ; la vitre est introduite dans le puits de vitre en la faisant passer à travers l'évidement de la portière tout en gardant la cassette décollée de la face intérieure de la portière puis ensuite, en jouant sur les moyens d'articulation de la vitre par rapport à la cassette, à venir fixer la cassette sur les emplacements définis sur la portière évidée.

Un autre but de l'invention est de proposer un système de montage articulé permettant de pallier les inconvénients de l'art antérieur.

Ce but est atteint par le fait que le système de montage articulé d'une vitre sur une portière évidée en son centre par une ouverture pratiquée dans la cloison intérieure du caisson de portière et substantiellement parallèle au contour extérieur de ce caisson, est caractérisé en ce que la vitre est montée sur une cassette au moyen d'un support de vitre coulissant sur au moins un rail de vitre, d'une part articulé à sa partie inférieure sur la platine et, d'autre part comportant à proximité de sa partie supérieure des moyens réalisant une liaison avec un jeu déterminé sur la cassette pour assurer un débattement angulaire de la vitre par rapport à la cassette, ladite vitre dépassant le bord supérieur de la cassette d'une hauteur déterminée suffisante pour permettre l'introduction de la vitre dans le puits de vitre lorsque la pièce support du dispositif lève-vitre est en position basse et la cassette en place dans l'ouverture du caisson de porte.

Selon une autre particularité, l'élément d'articulation en bas du rail de vitre est constitué par un bossage formé sur la cassette sur lequel repose le bas du rail coopérant avec un patin de guidage d'un câble actionnant le support de la vitre pour assurer la fonction lève-vitre par coulissement du support sur le rail.

Selon une autre particularité, la vitre est montée sur deux supports coulissant chacun sur un rail espacé de l'autre d'un intervalle et le bas de chaque rail est articulé au moyen d'une pièce constituant également un patin de guidage du câble.

Selon une autre particularité, les deux rails sont reliés entre eux par un troisième rail oblique renforçant la structure et constituant un chemin de guidage du câble reliant la partie inférieure du support lève-vitre d'un rail à la partie supérieure du support lève-vitre de l'autre rail, les autres extrémités des support lève-vitre étant chacun relié à des moyens d'entraînement.

Selon une autre particularité, chaque rail est relié à sa partie supérieure à la cassette au moyen d'une chape réglable rendue solidaire de la cassette par des moyens de fixation, ladite chape recevant en son centre une douille pourvue à ses extrémités d'ergots coopérant avec des ergots formés à l'extrémité supérieure de la chape pour constituer une butée-arrêt, les ergots de l'extrémité supérieure de la chape étant distants du fond de la chape d'une valeur définissant la course et contribuant au jeu angulaire des rails par rapport à la cassette.

Selon une autre particularité, l'ensemble cassette-rail à sa partie inférieure vient se loger dans un bossage du caisson de la portière, ledit bossage comportant sur sa surface intérieure un écrou rendu solidaire du caisson et coopérant avec une vis de fixation de l'ensemble sur la partie inférieure de la portière.

Selon une autre particularité, la partie supérieure du rail vient se glisser à l'intérieur de l'évidement de la portière dans un bossage du longeron de renfort du puits et des moyens de fixation permettent de rendre solidaire de la portière l'extrémité supérieure du rail.

Selon une autre particularité, les bords supérieurs de la cassette sont fixés à la portière à l'aide d'un moyen de fixation afin d'éliminer le jeu après montage.

D'autres particularités et avantages de la présente invention apparaîtront plus clairement à la lecture de la description ci-après faite en référence aux dessins annexés dans lesquels :
- la figure 1 représente une vue en coupe du système permettant le montage dans une portière évidée ;
- la figure 2 représente une vue en perspective de la face arrière de l'ensemble cassette-support de vitre avant son montage ;
- la figure 3A représente une vue de dessus d'un détail de l'extrémité inférieure d'un rail du dispostif ;
- la figure 3B représente une vue en coupe d'un détail d'articulation de l'extrémité inférieur du rail sur la cassette ;
- la figure 4 représente une vue en coupe des moyens permettant d'assurer un jeu au rail par rapport à la cassette ;
- la figure 5 représente une vue en perspective éclatée du système selon l'invention.

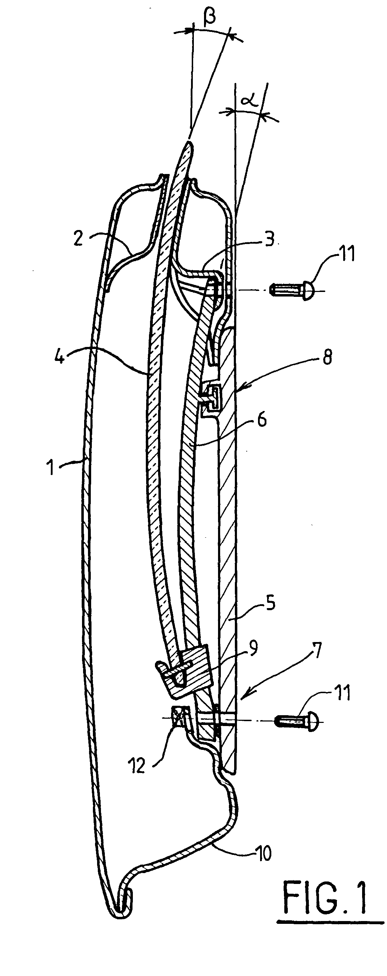

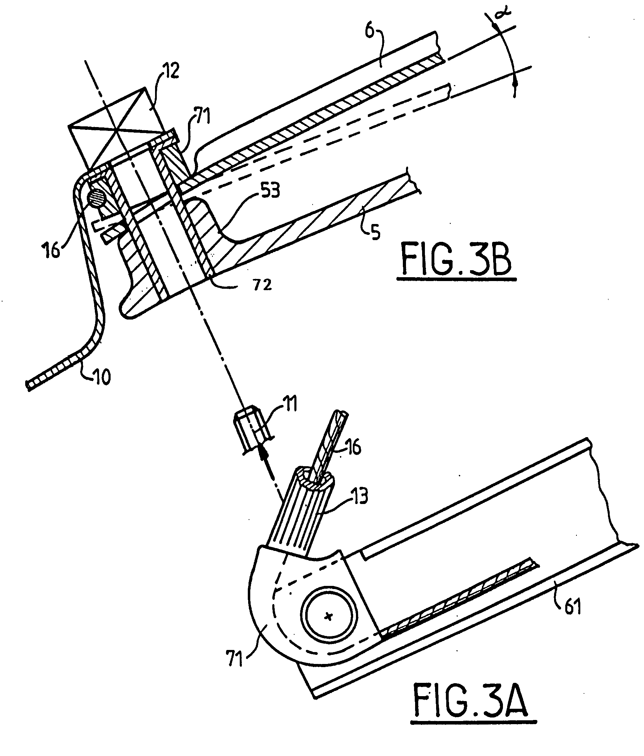

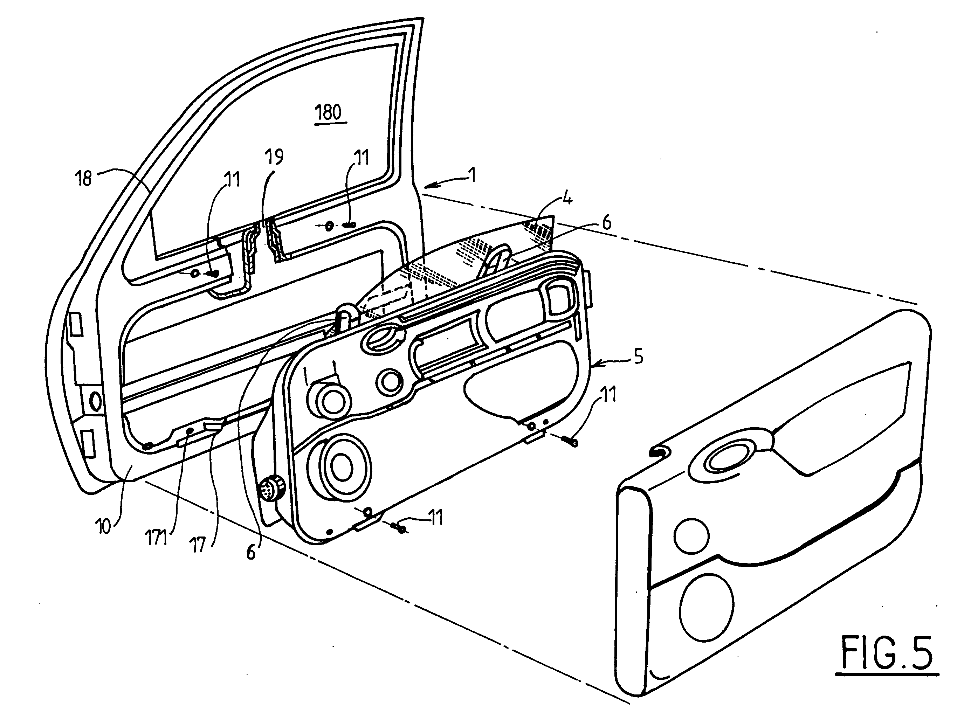

L'invention va maintenant être décrite à l'aide des figures 1 à 5 sur lesquelles on peut voir une portière (1) de véhicule automobile présentant une ouverture (17, figure 5) permettant le passage de composants non représentés montés sur une cassette (5). L'ouverture (17) est ménagée dans la paroi intérieure du caisson de la porte. Cette porte comporte à sa partie supérieure un cadre de vitre (18) formant une baie (180) dans laquelle une vitre (4) peut être mise en place en passant à travers un puits de vitre (19), ménagé à l'intérieur du caisson. La vitre (4) est montée sur au moins un support (9) coulissant sur au moins un rail (6). Le support (9) est entraîné par un dispositif à moteur électrique (15) et à câble (16) par exemple. Le rail (6) est rendu mécaniquement solidaire d'une cassette (5) avec un certain jeu angulaire par une articulation (7) jouant le rôle d'une charnière. Cette articulation est représentée plus en détails à la figure 3B et comporte un bossage (53) formé sur la face de la cassette (5) orientée vers le rail (6). Sur ce bossage (53), l'extrémité du rail (6) est montée à l'aide d'une douille métallique (72), un patin de guidage de câble (71) qui comporte une gorge dans laquelle un câble (16) peut circuler et sur une extrémité une ouverture constituant une butée pour l'extrémité de la gaine (13) entourant le câble (16). Le patin (71) vient appuyer sur le rail (6). L'extrémité inférieure du rail (6) est fixée sur la concavité (171) de la paroi de la portière prévue à cet effet à l'aide d'une vis (11) qui vient se visser sur un écrou (12) rendu solidaire de la paroi inférieure (10) du caisson de porte.

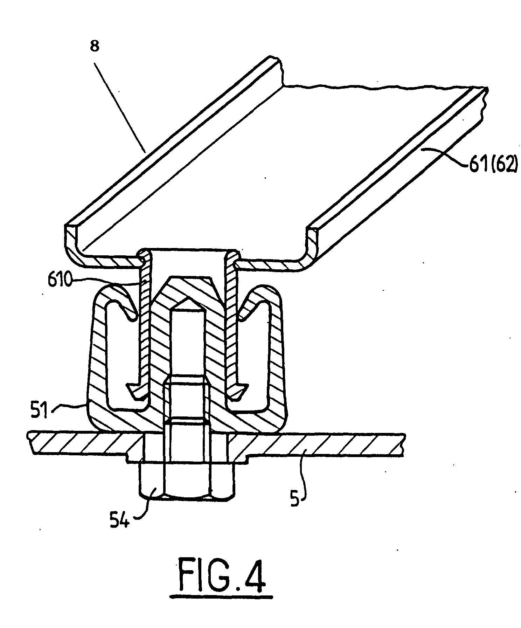

Le rail (6) est relié à la partie supérieure de la cassette (5) par une liaison (8) avec jeu représentée à la figure 4. Cette liaison (8) est constituée d'une douille métallique (610), respectivement (620) rendue solidaire du rail (61) ou respectivement (62) à proximité de son extrémité supérieure, ladite douille (610, 620) comportant des ergots à son autre extrémité. Les ergots sont introduits dans une chape (51), respectivement (52) dont le fond est rendu solidaire de la cassette par tout moyen approprié tel qu'une vis (54) de blocage. Les extrémités supérieures de la chape (51, 52) sont repliées vers l'intérieur de façon à former des ergots coopérant avec les ergots de la douille métallique respective (610, 620) pour limiter le débattement entre le rail (61, 62) et la cassette (5). L'espacement entre les ergots de la chape et le fond de celle-ci constitue une caisse qui délimite le débattement ( α ). L'ensemble cassette-rail-vitre est présenté pour que la vitre (4) qui dépasse à sa partie supérieure du bord supérieur de la cassette (5) soit introduite dans le puits renforcé par les longerons longitudinaux (2, 3) grâce au débattement angulaire fourni par la laison (8).

Les longueurs (2, 3) doivent permettre un jeu angulaire ( β ) suffisant pour introduire la vitre (4) avec un certain angle par rapport à la portière.

Ensuite l'extrémité inférieure de la cassette (5) est mise en place dans le bas (10) du caisson de la porte et rendu solidaire de celui-ci par des vis (11). Puis les extrémités supérieures du ou des rails sont fixées à l'intérieur sur le bord supérieur du cadre de porte et enfin le bord supérieur de la cassette est rendu solidaire du bord externe supérieur du cadre de porte par des moyens de fixation appropriés, de façon à supprimer tout débattement.

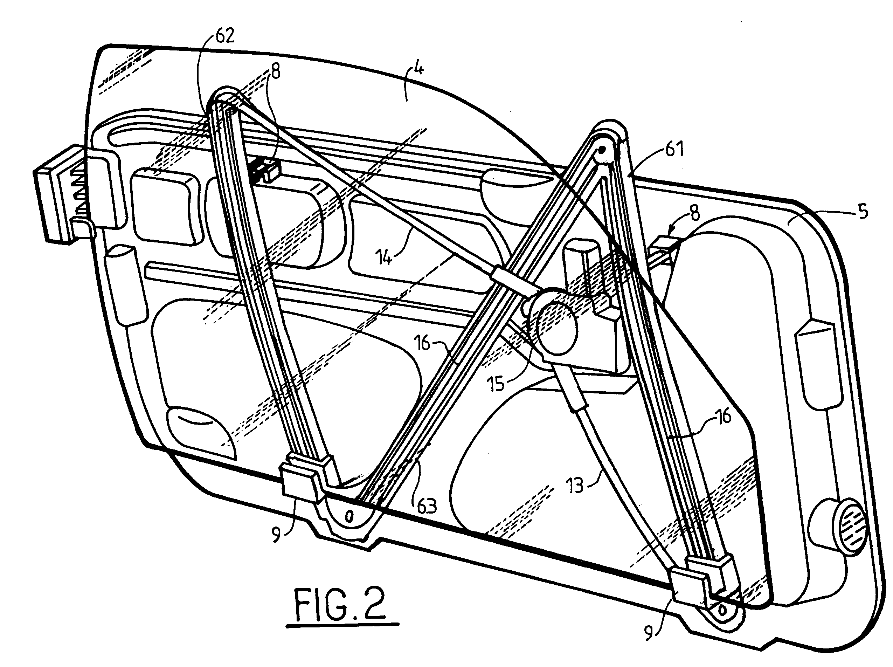

La figure 2 représente une variante de réalisation de l'invention dans laquelle la cassette (5) supporte deux rails (61, 62) espacés, sur lesquels coulissent deux supports de vitre (9) actionnés par un câble placé dans une gaine (14) servant à l'élévation de la vitre et un câble placé dans une gaine (13) servant à l'abaissement de la vitre. Chaque support (9) est relié à l'autre support par un câble intermédiaire (16) permettant de transmettre les efforts d'élévation ou d'abaissement commandés par les câbles des gaines (14) ou (13) suite à l'actionnement du moteur (15). Chaque rail (61, 62) est relié à un troisième rail (63) de façon à former une figure en forme N. Le rail oblique (63) constitue également un chemin de guidage du câble intermédiaire (16) reliant chacun des deux supports (9).

## Revendications

1. Procédé de montage d'une cassette de porte et d'une vitre, dans une portière (1) évidée et pourvue d'un puits de vitre, par une ouverture (17) pratiquée dans la cloison intérieure de la portière, caractérisé en ce que la vitre (4) est montée sur la cassette (5) avec des moyens d'articulation (7, 8) permettant un jeu angulaire par rapport à la cassette (5) ; la vitre est introduite dans le puits de vitre (19) en la faisant passer à travers l'ouverture (17) de la portière tout en gardant la cassette (5) décollée de la face intérieure de la portière puis ensuite, en jouant sur les moyens d'articulation de la vitre par rapport à la cassette, à venir fixer la cassette (5) sur les emplacements définis sur la portière évidée.

2. Système de montage articulé d'une vitre sur une portière évidée en son centre par une ouverture (17) pratiquée dans la cloison intérieure du caisson de portière (1) et substantiellement parallèle au contour extérieur de ce caisson, caractérisé en ce que la vitre (4) est montée sur une cassette (5) au moyen d'un support de vitre (9) coulissant sur au moins un rail de vitre (61, 62), d'une part articulé à sa partie inférieure sur la cassette (5) et d'autre part comportant à proximité de sa partie supérieure des moyens réalisant une liaison avec un jeu déterminé sur la cassette (5) pour assurer un débattement angulaire de la vitre (4) par rapport à la cassette, ladite vitre (4) dépassant le bord supérieur de la cassette (5) d'une hauteur déterminée suffisante pour permettre l'introduction de la vitre (4) dans le puits de vitre (19) lorsque la pièce support (9) du dispositif lève-vitre est en position basse et la cassette (5) en place dans l'ouverture (17) du caisson de porte.

3. Système de montage articulé selon la revendication 2, caractérisé en ce que l'élément d'articulation en bas du rail de vitre est constitué par un bossage (53) formé sur la cassette (5) sur lequel repose le bas du rail (61, 62) coopérant avec un patin (71) de guidage d'un câble (16) actionnant le support (9) de la vitre pour assurer la fonction lève-vitre par coulissement du support sur le rail.

4. Système de montage articulé selon la revendication 2 ou 3, caractérisé en ce que la vitre est montée sur deux supports (9) coulissant chacun sur un rail (61, 62) espacé de l'autre d'un intervalle et le bas de chaque rail est articulé au moyen d'une pièce (71) constituant également un patin de guidage du câble.

5. Système de montage articulé selon la revendication 4, caractérisé en ce que les deux rails sont reliés entre eux par un troisième rail oblique renforçant la structure et constituant un chemin (13) de guidage de câble (16) reliant la partie inférieure d'un patin lève-vitre (9) d'un rail (62) à la partie supérieure du patin lève-vitre (9) de l'autre rail (61), les autres extrémités des supports lève-vitre étant chacun relié à des moyens d'entraînement.

6. Système de montage articulé selon une des revendications 2 à 5, caractérisé en ce que chaque rail est relié à sa partie supérieure à la cassette au moyen d'une chape (51) rendue solidaire de la cassette par des moyens de fixation (54), ladite chape recevant en son centre une douille (610) pourvue à ses extrémités d'ergots coopérant avec des ergots formés à l'extrémité supérieure de la chape pour constituer une butée-arrêt, les ergots de l'extrémité supérieure de la chape étant distants du fonds de la chape d'une valeur définissant la course contribuant au jeu angulaire des rails par rapport à la cassette.

7. Système de montage articulé selon une des revendications 2 à 6, caractérisé en ce que l'ensemble cassette-rail à sa partie inférieure vient se loger dans un bossage (171) du caisson de la portière, ledit bossage (171) comportant sur sa surface intérieure un écrou (12) rendu solidaire du caisson et coopérant avec une vis de fixation de l'ensemble sur la partie inférieure de la portière.

8. Système de montage articulé selon la revendication 7, caractérisé en ce que la partie supérieure du rail vient se glisser à l'intérieur de l'ouverture (17) de la portière dans un bossage du longeron (13) de renfort du puits (19) et des moyens de fixation permettent de rendre solidaire de la portière l'extrémité supérieure du rail.

9. Système de montage articulé selon la revendication 8, caractérisé en ce que les bords supérieurs de la cassette sont fixés à la portière à l'aide d'un moyen de fixation afin d'éliminer le jeu après montage.

## Claims

1. Procedure for assembly of a door cassette and window inside a hollow door (1) and provided with a window well, through an opening (17) formed in the inside partition of the door, characterized in that the window (4) is installed on the cassette (5) with articulation means (7, 8) enabling an angular clearance with respect to the cassette (5); the window is inserted in the window well (19) passing it through the door opening (17) while keeping the cassette (5) separated from the inside of the door and then, by adjusting the window articulation means with respect to the cassette, fixing the cassette (5) on the defined locations on the hollow door.

2. Articulated assembly system for a window on a hollow door, at the center of which there is an opening (17) formed in the inside partition of the door compartment (1) and approximately parallel to the outside contour of this compartment, characterized in that the window (4) is installed on a cassette (5) by means of a window support (9) sliding over at least one window rail (61, 62), articulated at the bottom on the cassette (5) and comprising means near the top forming a connection with a determined clearance on the cassette (5) to enable an angular movement of the window (4) with respect to the cassette, the said window (4) projecting beyond the top edge of the cassette (5) by a determined height sufficient so that the window (4) can be inserted into the window well (19) when the support part (9) of the window winder device is in the low position and the cassette (5) is in position in the opening (17) of the door compartment.

3. Articulated assembly system according to claim 2, characterized in that the articulation element at the bottom of the window rail is composed of a bushing (53) formed on the cassette (5) on which the bottom of the rail (61, 62) is supported, that cooperates with a pad (71) guiding a cable (16) activating the window support (9), to perform the window winder function by the support sliding on the rail.

4. Articulated assembly system according to claim 2 or 3, characterized in that the window is mounted on two supports (9) each sliding on a rail (61, 62) at a particular spacing from the other, and the bottom of each rail is articulated by means of a part (71) that also forms a cable guide pad.

5. Articulated assembly system according to claim 4, characterized in that the two rails are connected together by a third oblique rail reinforcing the structure and forming a path (13) guiding the cable (16) connecting the bottom part of a window winder pad (9) of a rail (62) to the upper part of the window winder pad (9) of the other rail (61), the other ends of the window winder supports each being connected to drive means.

6. Articulated assembly system according to any one of claims 2 to 5, characterized in that each rail is connected at its upper part to the cassette by means of a clevis (51) fixed to the cassette by attachment means (54), the said clevis being fitted with a socket (610) at its center fitted with pins at its ends that cooperate with pins formed at the upper end of the clevis to form a limit stop, the pins at the top end of the clevis being separated from the bottom of the clevis by a sufficiently large distance to define the travel contributing to the angular clearance of the rails with respect to the cassette.

7. Articulated assembly system according to any one of claims 2 to 6, characterized in that bottom of the cassette-rail assembly fits into a bushing (171) in the door compartment, the lower surface of the said bushing (171) being fitted with a nut (12) fixed to the compartment and cooperating with a screw attaching the assembly to the bottom part of the door.

8. Articulated assembly system according to claim 7, characterized in that the top part of the rail slides inside the opening (17) of the door inside a bushing in the reinforcement rail (13) of the well (19) and attachment means fixing the top end of the rail to the door.

9. Articulated assembly system according to claim 8, characterized in that the top edges of the cassette are fixed to the door using attachment means in order to eliminate the clearance after assembly.

## Patentansprüche

1. Einbauverfahren einer Tür- und Glasscheibenkassette in eine ausgehöhlte und mit einem Glasscheibenschacht versehene Wagentüre (1), durch eine in der Innenwand der Wagentüre angebrachte Öffnung hindurch, dadurch gekennzeichnet, dass die Glasscheibe (4) auf der Kassette (5) mit Drehgelenkmitteln (7, 8) montiert ist, die im Verhältnis zur Kassette (5) Winkelspiel lassen; die Glasscheibe wird in den Glasscheibenschacht (19) eingelassen, indem sie durch die Wagentüröffnung (17) geschoben wird, wobei die Kassette (5) von der Innenseite der Wagentüre entfernt bleibt, und dann, durch Einwirkung auf die Drehgelenkmittel der Glasscheibe im Verhältnis zur Kassette, indem die Kassette (5) an den auf der ausgehöhlten Wagentüre festgesetzten Stellen befestigt wird.

2. Drehgelenkeinbausystem einer Glasscheibe auf einer ausgehöhlten Wagentüre in deren Mittelpunkt durch eine in der Innenwand des Wagentürsenkkastens (1) angebrachte und im wesentlichen zum äußeren Umriss dieses Senkkastens parallele Öffnung (17) hindurch, dadurch gekennzeichnet, dass die Glasscheibe (4) auf einer Kassette (5) mittels eines Glasscheibenhalters (9) montiert ist, der auf mindestens einer Glasscheibenschiene (61, 62) gleitet, die einerseits in ihrem unteren Teil auf der Kassette (5) angelenkt ist und andererseits in der Nähe ihres oberen Teils Mittel umfasst, die eine Verbindung mit einem bestimmten Spielraum auf der Kassette (5) bewirken, um eine winkelige Ausfederung der Glasscheibe (4) im Verhältnis zur Kassette (5) zu gewährleisten, wobei die Glasscheibe (4) über den oberen Rand der Kassette (5) um eine bestimmte Höhe hinausgeht, die ausreicht, um das Einlassen der Glasscheibe (4) in den Glasscheibenschacht (19) zu ermöglichen, wenn das Haltestück (9) des Scheibenhebers in der heruntergelassenen Position ist und sich die Kassette (5) in der Öffnung (17) des Türsenkkastens befindet.

3. Drehgelenkeinbausystem nach Anspruch 2, dadurch gekennzeichnet, dass das Drehgelenkelement unten an der Glasscheibenschiene aus einem auf der Kassette (5) geformten Buckel (53) besteht, auf dem die Unterseite der Schiene (61, 62) ruht, die mit einem Führlager (71) eines Kabels (16), das den Glasscheibenhalter (9) bewegt, zusammenwirkt, um die Scheibenheberfunktion durch das Gleiten des Halters auf der Schiene zu gewährleisten.

4. Drehgelenkeinbausystem nach Anspruch 2 oder 3, dadurch gekennzeichnet, dass die Glasscheibe auf zwei Haltern (9) montiert ist, die jeweils auf einer Schiene (61, 62) gleiten, die von der anderen durch einen Zwischenraum entfernt ist, und die Unterseite jeder Schiene mittels eines Stücks (71), das auch ein Kabelführlager bildet, gelenkig ist.

5. Drehgelenkeinbausystem nach Anspruch 4, dadurch gekennzeichnet, dass die beiden Schienen miteinander über eine dritte schräge Schiene verbunden sind, welche die Struktur verstärkt und eine Kabelführstrecke (16) bildet, die den unteren Teil eines Scheibenheberlagers (9) einer Schiene (62) mit dem oberen Teil des Scheibenheberlagers (9) der anderen Schiene (61) verbindet, wobei die anderen Enden der Scheibenheberhalter jeweils mit Antriebsmitteln verbunden sind.

6. Drehgelenkeinbausystem nach einem der Ansprüche 2 bis 5, dadurch gekennzeichnet, dass jede Schiene an ihrem oberen Teil mit der Kassette mittels einer Abdeckung (51) verbunden ist, die mit der Kassette durch Befestigungsmittel (54) einstückig ist, wobei die Abdeckung in ihrem Mittelpunkt eine Hülse (610) aufnimmt, die an ihren Enden mit Nocken versehen ist, die mit am oberen Ende der Abdeckung geformten Nocken zusammenwirken, um einen Anschlag zu bilden, wobei die Nocken des oberen Endes der Abdeckung vom Boden der Abdeckung um einen Wert entfernt sind, der den Weg definiert, der zum Winkelspiel der Schienen im Verhältnis zur Kassette beiträgt.

7. Drehgelenkeinbausystem nach einem der Ansprüche 2 bis 6, dadurch gekennzeichnet, dass sich die Kassetten-Schienen-Konstruktion an ihrem unteren Teil an einen Buckel (171) des Wagentürsenkkastens anpasst, wobei der Buckel (171) an seiner unteren Oberfläche eine Mutter (12) umfasst, die mit dem Senkkasten einstückig gemacht ist und mit einer Befestigungsschraube der Konstruktion auf dem unteren Teil der Wagentüre zusammenwirkt.

8. Drehgelenkeinbausystem nach Anspruch 7, dadurch gekennzeichnet, dass der obere Teil der Schiene in das Innere der Wagentüröffnung (17) in einen Buckel des Längsträgers (13) zur Verstärkung des Schachts (19) gleitet, und die Befestigungsmittel es ermöglichen, das obere Ende der Schiene mit der Wagentüre einstückig zu machen.

9. Drehgelenkeinbausystem nach Anspruch 8, dadurch gekennzeichnet, dass die oberen Ränder der Kassette an der Wagentüre anhand eines Befestigungsmittels befestigt sind, um das Spiel nach dem Einbau zu entfernen.
